# EUROPÄISCHE PATENTSCHRIFT

(11) **EP 0 633 276 B1**
(45) Veröffentlichungstag und Bekanntmachung des Hinweises auf die Patenterteilung: **28.01.1998**
(21) Anmeldenummer: 94109814.7
(22) Anmeldetag: 24.06.1994
(51) Int. Cl.: C08G 18/08

(54) **Verfahren zum Herstellen von Formteilen und Füllungen aus Polyurethan-Hart-und Weichschaumstoffen**
Process for the preparation of articles and fills from rigid and flexible polyurethane foams
Procédé de préparation d'articles et de matériaux de remplissage à base de mousses et rigides de polyuréthane

(30) Priorität: 09.07.1993 DE 4322887
(43) Veröffentlichungstag der Anmeldung: 11.01.1995
(73) Patentinhaber: BAYER AG, 51368 Leverkusen (DE)
(72) Erfinder: Vogel, Christoph, Dipl.-Ing., D-51519 Odenthal (DE)

(56) Entgegenhaltungen:
- US-A- 4 298 708

## Beschreibung

Bei der Fertigung von Formteilen, beim Ausfüllen von Hohlräumen sowie unter anderem bei der diskontinuierlichen Panelherstellung hält man die Austragsleistung der Schäummaschinen so hoch, daß die erforderliche Reaktionsgemischmenge in möglichst kurzer Zeit eingetragen wird. Man will damit ein möglichst enges Altersspektrum des Reaktionsgemisches erzielen, damit der Abbindevorgang möglichst überall gleichzeitig einsetzt.

Sind größere Formteile in Formwerkzeugen herzustellen, große Hohlräume auszuschäumen oder Panels diskontinuierlich herzustellen, so kommt man nicht ohne längere Schußzeiten aus oder man muß in mehreren Schüssen einfüllen. In beiden Fällen wird das Altersspektrum des Reaktionsgemisches breiter. Dadurch kommt es zu Rohdichteschwankungen des fertigen Schaumstoffs, zur Anisotropie der Zellstruktur durch Unterlaufen bzw. Überwälzen des schäumenden Reaktionsgemisches, und der Schaumstoff weist in den gestörten Bereichen mangelnde Dimensionsstabilität auf.

Es besteht die Aufgabe, die durch ein größeres Altersspektrum des Reaktionsgemisches entstehenden Qualitätseinbußen zu eliminieren bzw. zu kompensieren.

Die Erfindung betrifft daher ein Verfahren zum Herstellen von Formteilen und Füllungen aus Polyurethan-Hart- und -Weichschaumstoffen und Polyurethan-Hartschaumstoffen mit Isocyanuratstrukturen durch Umsetzung von mindestens zwei gegenüber Isocyanatgruppen reaktionsfähige Wasserstoffatome aufweisenden Verbindungen, in Gegenwart von Wasser, einem Aktivator oder einem Gemisch von Aktivatoren und leicht flüchtigen, organischen Substanzen als Treibmittel sowie gegebenenfalls Schaumstabilisatoren, Flammschutzmitteln, mit Polyisocyanaten, welche zusammen eine Mischkammer durchlaufen und wobei das aufschäumende Reaktionsgemisch einer Abbindezeit unterworfen wird und aushärtet.

Das Verfahren ist dadurch gekennzeichnet, daß der Aktivator dem Reaktionsgemisch in der Mischkammer oder dem Polyol kurz vor der Mischkammer im Sinne einer überall möglichst gleichzeitig einsetzenden Abbindezeit in zeitlich steigender Menge zugesetzt wird.

Durch das Verfahren wird erreicht, daß das Alter des später eingetragenen Reaktionsgemisches durch eine kürzere Start-Abbindezeit kompensiert wird. Je nach den Anforderungen bei der Herstellung stehen mehrere Varianten des neuen Verfahrens zur Verfügung.

Gemäß einer ersten Variante wird das Reaktionsgemisch in einem Schuß erzeugt.

Dabei wird die Aktivatormenge, über die Dauer des Schusses gesehen, stetig gesteigert.

Gemäß einer zweiten Variante wird das Reaktionsgemisch in mehreren Schüssen erzeugt, wobei der Aktivatoranteil von Schuß zu Schuß erhöht wird.

Dieses Verfahren bietet sich an, wenn größere Hohlräume ausgeschäumt werden sollen, wobei die einzelnen Schüsse kurz sind und schnell aufeinanderfolgen.

Gemäß einer dritten Variante wird das Reaktionsgemisch in mehreren Schüssen erzeugt und der Aktivatoranteil von Schuß zu Schuß erhöht und während mindestens eines Schusses zusätzlich gesteigert. Er laßt sich natürlich auch während jedes Schusses steigern.

Man wird diese Methode anwenden, wenn sehr große und kompliziert gestaltete Hohlräume auszufüllen sind, das Setzen der einzelnen Schüsse mehr Zeit beansprucht und wenn die Schüsse bzw. einzelne Schüsse länger dauern.

Maschinentechnisch bereitet das neue Verfahren keinerlei Schwierigkeiten. Entweder die vorhandene Aktivatorpumpe läßt sich während des Betriebes bezüglich ihrer Förderleistung variieren oder, was bei der Zugabe geringer zusätzlicher Mengen der Genauigkeit wegen vorteilhafter ist, man verwendet eine zweite Aktivatorpumpe mit steuerbarer Förderleistung.

Vorzugsweise wird die Zugabe der Aktivatormenge programmgesteuert.

Diese Verfahrensweise erlaubt es, beliebige, den Erfordernissen entsprechende Profile der Aktivatorsteigerung über die Zeit exakt vorzugeben.

Besonders vorteilhaft ist es, wenn das Polyisocyanat ein polymeres Diphenylmethandiisocyanat (MDI) mit einem Gehalt an Monomeren von 25 bis 70 Gew.-% ist.

Vorzugsweise werden als Aktivatoren Verbindungen verwendet, welche die Reaktion des vorgenannten Polyisocyanats mit den Hydroxylgruppen enthaltenden Verbindungen stark beschleunigen.

### Vergleichsversuch (gemäß bekanntem Verfahren):

Mittels Lanzenziehtechnik wurde bei der Herstellung eines Verbundelementes aus einem Schaumstoffkern mit Deckschichten unter Verwendung der Komponenten A und B wie folgt gearbeitet:

Die Komponente A ist eine Mischung aus:

| | |
|---|---|
| 40 Gew.-Teilen | eines Esterpolyols der OH-Zahl 370, hergestellt durch Umsetzung von Trimethylolpropan mit Phthalsäure, Adipinsäure und Ölsäure |
| 30 Gew.-Teilen | eines Polyethers der OH-Zahl 385, hergestellt durch Umsetzung von Trimethylolpropan mit Propylenoxid |
| 30 Gew.-Teilen | eines Polyethers der OH-Zahl 550, hergestellt durch Umsetzung von Trimethylolpropan mit Propylenoxid |
| 1,2 Gew.-Teilen | eines handelsüblichen polyethermodifizierten Siloxan-Schaumstoffstabilisators (Tegostab® B 1048 der Firma Goldschmidt, Essen, BRD) |
| 1,5 Gew.-Teilen | Wasser |
| 0,325 Gew.-Teilen | einer Zubereitung tertiärer Amine als Katalysator (erhältlich unter der Bezeichnung Desmorapid® PP von Rhein-Chemie Rheinau, Mannheim, BRD) |
| 0,325 Gew.-Teilen | eines aliphatischen tertiären Amins als Katalysator (erhältlich unter der Bezeichnung Desmorapid® PV von Rhein-Chemie Rheinau, Mannheim, BRD) und |
| 40 Gew.-Teilen | Monofluortrichlormethan. |

Komponente B:

| | |
|---|---|
| 150 Gew.-Teile | polymeres MDI mit einem NCO-Gehalt von 31,5 Gew.-% (erhältlich unter der Bezeichnung Desmodur® 44V20, von Bayer AG, Leverkusen, BRD) |

Die hergestellten Mischungen A und B wurden mittels einer Hochdruckverdüsungsmaschine (Typ HK 270 Maschinenfabrik Hennecke GmbH, St. Augustin, BRD) vermischt und ein Verbundelement der Rohdichte 45 kg/m³ mit den Abmessungen 6 x 1 x 0,05 m nach der Lanzenziehtechnik hergestellt. Die Maschinenaustragsleistung lag bei 450 g/Sekunde. Die Gießzeit lag bei 30 Sekunden. Die Eintragsmenge betrug 13,5 kg Reaktionsgemisch. Die Reaktionsdaten des Schaumstoffgemisches betrugen:

| | |
|---|---|
| Startzeit | 18 Sekunden |
| Abbindezeit | 100 Sekunden |
| Rohdichte | 23 kg/m³ (frei geschäumt) |

Die Rohdichteverteilung im Verbundelement lag bei:

| | |
|---|---|
| Panelanfang | 32 bis 35 kg/m³ (Schußbeginn) |
| Panelmitte | 40 bis 45 " |
| Panelende | 50 bis 55 " (Schußende) |

### Beispiel (erfindungsgemäßes Verfahren):

Es wurde folgendermaßen gearbeitet:

Zum Einsatz kamen die im Vergleichsversuch angegebenen Abmischungen A und B.

Der Komponente A wurde polyolseitig über einen Impfblock eine Mischung der im Vergleichsversuch genannten tertiären Aminkatalysatoren (1:1 Gew.-Teile) innerhalb der Injektionszeit von 30 Sekunden in steigenden Mengen von 0 bis 0,145 g pro 140 g Komponente A zudosiert.

Die pro Zeiteinheit steigende Aktivatormenge entspricht der vorher ermittelten Aktivitätskurve des Reaktionsgemisches.

| Aktivatorzusatz (g) pro 140 g Komp. A | Startzeit (Sekunden) | Abbindezeit (Sekunden) |
|---|---|---|
| 0 | 18 - 22 | 100 |
| 0,025 | 15 - 20 | 94 |
| 0,050 | 13 - 16 | 88 |
| 0,075 | 12 - 15 | 83 |
| 0,100 | 9 - 14 | 78 |
| 0,125 | 8 - 12 | 74 |
| 0,150 | 7 - 11 | 69 |
| 0,175 | 7 - 10 | 65 |

Daraus resultiert die Pumpenförderleistung der Zusatzaktivatorpumpe:

| Zeitpunkt | Förderleistung |
|---|---|
| nach 0 Sekunden | 0 g/Sekunden |
| nach 5 Sekunden | 0,0188 g/Sekunden |
| nach 10 Sekunden | 0,0400 g/Sekunden |
| nach 15 Sekunden | 0,0625 g/Sekunden |
| nach 20 Sekunden | 0,0875 g/Sekunden |
| nach 25 Sekunden | 0,1125 g/Sekunden |
| nach 30 Sekunden | 0,140 g/Sekunden |

Reaktionsdaten des Reaktionsgemisches

| | | | | |
|---|---|---|---|---|
| Injektionszeit (Sekunden) | 1 | 10 | 20 | 30 |
| Aktivatorförderleistung g/140 g Komp. A | 0 | 0,04 | 0,095 | 0,145 |
| Startzeit (Sekunden) | 18-22 | 15-18 | 12-15 | 7-11 |
| Abbindezeit (Sekunden) | 100 | 90 | 80 | 70 |
| RD (kg/m³) | 23 | 23 | 23 | 22,5 |

Die Rohdichteverteilung in den mittels Lanzenziehtechnik gefertigten Verbundelementen der Abmessungen 6 x 1 x 0,05 m lag wie folgt:

| | |
|---|---|
| Panelanfang | 40 bis 45 kg/m³ (Schußbeginn) |
| Panelmitte | 40 bis 45 " |
| Panelende | 40 bis 45 " (Schußende) |

## Patentansprüche

1. Verfahren zum Herstellen von Formteilen und Füllungen aus Polyurethan-Hart- und -Weichschaumstoffen und Polyurethan-Hartschaumstoffen mit Isocyanuratstrukturen durch Umsetzung von mindestens zwei gegenüber Isocyanatgruppen reaktionsfähige Wasserstoffatome aufweisenden Verbindungen, in Gegenwart von Wasser, einem Aktivator oder einem Gemisch von Aktivatoren und leicht flüchtigen, organischen Substanzen als Treibmittel sowie gegebenenfalls Schaumstabilisatoren, Flammschutzmitteln, mit Polyisocyanaten, welche zusammen eine Mischkammer durchlaufen und wobei das aufschäumende Reaktionsgemisch einer Abbindezeit unterworfen wird und aushärtet, dadurch gekennzeichnet, daß der Aktivator dem Reaktionsgemisch in der Mischkammer oder dem Polyol kurz vor der Mischkammer im Sinne einer überall möglichst gleichzeitig einsetzenden Abbindezeit in zeitlich steigender Menge zugesetzt wird.

2. Verfahren nach Anspruch 1, dadurch gekennzeichnet, daß das Reaktionsgemisch in einem Schuß erzeugt wird.

3. Verfahren nach Anspruch 1, dadurch gekennzeichnet, daß das Reaktionsgemisch in mehreren Schüssen erzeugt wird, wobei der Aktivatoranteil von Schuß zu Schuß erhöht wird.

4. Verfahren nach Anspruch 1 oder 3, dadurch gekennzeichnet, daß das Reaktionsgemisch in mehreren Schüssen erzeugt und der Aktivatoranteil von Schuß zu Schuß erhöht und während mindestens eines Schusses zusätzlich gesteigert wird.

5. Verfahren nach einem der Ansprüche 1 bis 4, dadurch gekennzeichnet, daß die Steigerung der Aktivatormenge programmgesteuert wird.

6. Verfahren nach einem der Ansprüche 1 bis 5, dadurch gekennzeichnet, daß das Polyisocyanat ein polymeres Diphenylmethandiisocyanat mit einem Gehalt an Monomeren von 25 bis 70 Gew.-% ist.

## Claims

1. Process for the production of mouldings and fillings from rigid and flexible polyurethane foams and rigid polyurethane foams having isocyanurate structures by reacting compounds containing at least two isocyanatereactive hydrogen atoms, in the presence of water, an activator or mixture of activators and readily volatile organic substances as blowing agents, optionally together with foam stabilisers, flame retardants, with polyisocyanates, which pass together through a mixing chamber and wherein the foaming reaction mixture is subjected to a fibre time and cures, characterised in that the activator is added in a quantity rising with time to the reaction mixture in the mixing chamber or to the polyol shortly upstream from the mixing chamber in such a manner as to ensure that the fibre time begins as far as possible simultaneously everywhere.

2. Process according to claim 1, characterised in that the reaction mixture is produced in a single shot.

3. Process according to claim 1, characterised in that the reaction mixture is produced in two or more shots, wherein the proportion of activator is increased from shot to shot.

4. Process according to claim 1 or 3, characterised in that the reaction mixture is produced in two or more shots and the proportion of activator is increased from shot to shot and is additionally raised during at least one shot.

5. Process according to one of claims 1 to 4,
characterised in that the increase in the quantity of activator is program-controlled.

6. Process according to one of claims 1 to 5,
characterised in that the polyisocyanate is a polymeric diphenylmethane diisocyanate having a monomer content of 25 to 70 wt.%.

## Revendications

1. Procédé de production de pièces moulées et de garnissages en mousses de polyuréthane rigides et souples et en mousses rigides de polyuréthane avec des structures d'isocyanurate par réaction de composés présentant au moins deux atomes d'hydrogène réactifs vis-à-vis des groupes isocyanates, en présence d'eau, d'un activateur ou d'un mélange d'activateurs et de substances organiques facilement volatiles comme agents gonflants, ainsi que, le cas échéant, des stabilisants de mousses, des ignifugeants, avec des polyisocyanates, qui traversent ensemble une chambre de mélange et où le mélange réactif à expanser est soumis à une période de prise et est durci, caractérisé en ce qu'on ajoute l'activateur au mélange réactif dans la chambre de mélange ou au polyol juste avant la chambre de mélange au sens d'une quantité croissante en fonction du temps pour réaliser une durée de prise qui a lieu simultanément partout le mieux possible.

2. Procédé selon la revendication 1, caractérisé en ce qu'on réalise le mélange réactionnel en une opération.

3. Procédé selon la revendication 1, caractérisé en ce qu'on produit le mélange réactionnel en plusieurs opérations, où on augmente la teneur en activateur d'une opération à l'autre.

4. Procédé selon la revendication 1 ou 3, caractérisé en ce qu'on produit le mélange réactionnel en plusieurs opérations et on augmente la teneur en activateur d'une opération à l'autrc et pendant au moins une opération, on l'augmente en plus.

5. Procédé selon l'une des revendications 1 à 4, caractérisé en ce que l'augmentation de la quantité d'activateur est commandée par un programme.

6. Procédé selon l'une des revendications 1 à 5, caractérisé en ce que le polyisocyanate est un diphénylméthanediisocyanate polymère et a une teneur en monomère de 25 à 70 % en poids.
